# EUROPEAN PATENT SPECIFICATION

(11) **EP 0 226 801 B1**
(45) Date of publication and mention of the grant of the patent: **13.07.1994**
(21) Application number: 86115752.7
(22) Date of filing: 13.11.1986
(51) Int. Cl.: H04B 10/16, H02M 3/338

(54) **Optical repeater and regulated current feeding system for the same**
Optische Relaisstation und gesteuertes Stromspeisungssystem dafür
Répéteur optique et système d'alimentation de courant réglée correspondant

(30) Priority: 25.11.1985 JP 262461/85
(43) Date of publication of application: 01.07.1987
(73) Proprietor: FUJITSU LIMITED, Kawasaki-shi, Kanagawa 211 (JP)
(72) Inventor: Hanyuda, Ken, Yokohama-shi Kanagawa, 227 (JP); Ohara, Michimasa, Kawasaki-shi Kanagawa, 211 (JP)
(74) Representative: Lehn, Werner, Dipl.-Ing.

(56) References cited:
- WO-A-84/00849
- DE-A- 3 330 045
- JP-A-56 154 839
- PATENT ABSTRACTS OF JAPAN, vol. 10, no. 113 (E-399)[2170], 26th April 1986 & JP-A-60 249 444

## Description

### BACKGROUND OF THE INVENTION

The present invention relates to an optical communication system and more specifically to a power feeding system in which at least one optical repeater is provided in the optical communication path, a regulated current feeding equipment which supplies a constant DC current to each repeater is provided at the one end or both ends of the optical communication path and electronic power is supplied to each optical repeater from this regulated current feeding equipment through conductors.

A power feeding system of the present invention is employed for an ordinary optical communication system and is also suitable for a power feeding system employed for an optical communication system having long transmitting or receiving distance, for example, the submarine optical communication system.

In various wired transmission system, such as the power feeding system which supplies power from a terminal station to the intermediate repeaters provided along the cable route with a constant interval, a variety of methods where regulated AC or DC vltage or current is supplied, and repeaters are connected in series or in parallel through the power transmission path are proposed.

Transmission of AC power requires rectifying and smoothing circuits for the repeaters, resulting in a complicated circuit structure, but it provides such an advantage as freely supplying insulated voltage from a transformer employed. Therefore, this power transmission method is often employed for the transmission system utilizing the electron tube type repeaters which requires many kinds of voltages. However, the power factor is lowered by capacitance and inductance of cables and thereby a voltage drop becomes large and therefore power transmission efficiency (power required for all repeaters/power transmitted) is also lowered. Since DC power feeding is hardly influenced by the cable, it is comparatively easy to supply a constant power to the repeaters and the power transmission efficiency is also high. Accordingly, this method is often employed to the transmission system utilizing transistorized repeaters which is operated by a kind of DC voltage. In addition, since a submarine coaxial transmission system requires high reliability for the repeaters and provides a long power feeding span, a DC power feeding system utilizing less number of parts for the repeater and assures very stable power feeding.

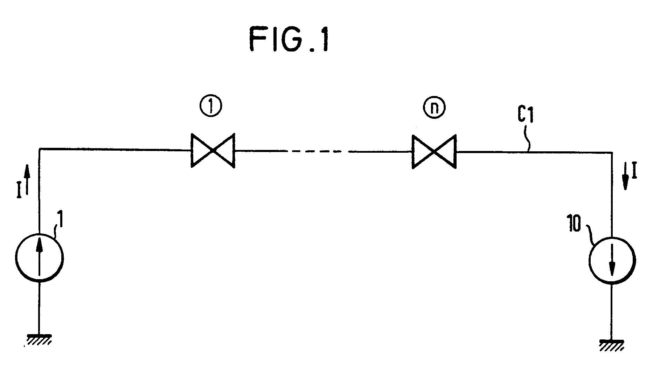

Fig. 1 illustrates an ordinary DC power feeding system of the type known from JP-A-56-154 839. The n-repeaters 1 to n in total are connected in series to the power transmission path C1 and a constant current I is supplied to each repeater from the regulated current feeding equipments 1, 10 provided at both ends of power transmission path. In this case, the regulated current feeding equipments 1, 10 are provided at both ends because each power feeding equipment is destined to supply the power respectively to n/2-repeaters and thereby a load of one power feeding equipment can be alleviated, and this method is adapted for the system which provides a long transmission distance such as a submarine coaxial transmission system. In case the transmission distance is short or each power feeding equipment has sufficient power and the one power feeding equipment fails in Fig. 1, power feeding is carried out by only one power feeding equipment. The DC power feeding system illustrated in Fig. 1 is also employed even in the optical fiber cable communication, particularly a submarine optical communication system.

In the optical transmission system it is impossible to supply the power feeding current superposed on the transmission signal using the communication path itself as in the coaxial cable, a power transmission path of conductor is provided within the optical fiber cable and power is fed through this conductor.

In this case, the power transmission path C1 in Fig. 1 is a conductor within the optical fiber cable.

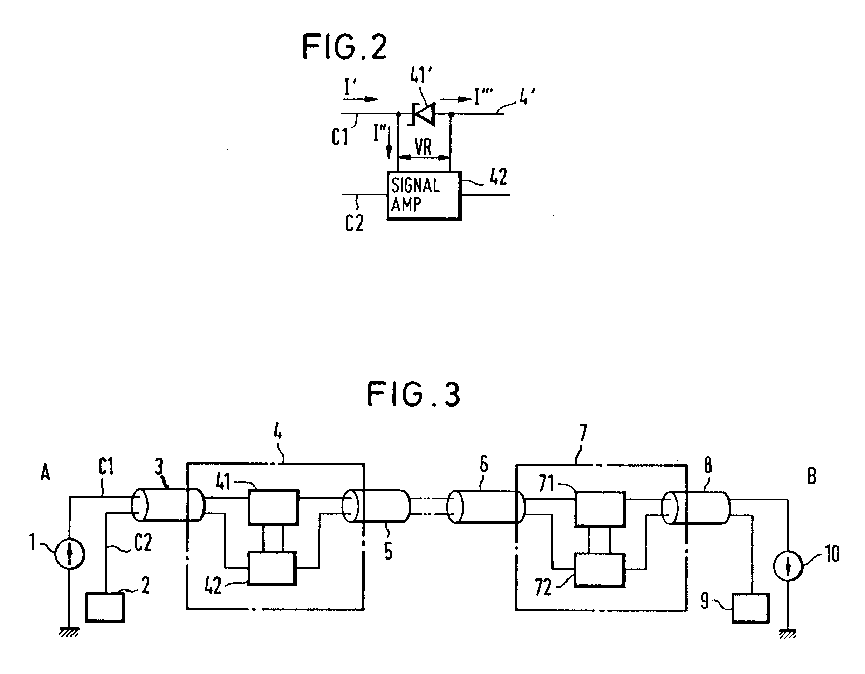

Fig. 2 illustrates detail of each repeater 1 to n in Fig. 1 and an optical repeater used in the optical communication system which is the object of the present invention.

As illustrated in Fig. 2, an optical repeater has a signal amplifier circuit 42 comprising a photoelectric conversion element, an amplifier circuit and a light emitting element, etc. A current I'' branched from the feeding current I' provided through the power transmission path C1 in order to supply the necessary power to the signal amplifier circuit 42 is supplied to said signal amplifier circuit 42 and a voltage V_{R} obtained at both ends of zener diode 41' by applying other branched current I''' to the zener diode 41' is applied to the signal amplifier circuit 42. Thereby, a power V_{R} x I'' is supplied to the signal amplifying circuit 41'. C2 is the signal transmission path formed by optical fiber. The conventional power supply circuit 41' illustrated in Fig. 2 is formed only by a zener diode and it is desirable from the viewpoint of reliability and space, considering the installation condition of optical reepeaters but a feeding current I' required for the optical repeater is about 1 to 2A. This value is remarkably larger than the current of 100 to 200 mA which is a feeding current for the coaxial cable. This is because the optical repeater requires a bias current and a drive current for an optical semi-conductor, such as laser diode, A.P.D., therefore larger current is consumed by these in comparison with the coaxial cable system.

Since power loss in the power transmission path C1 is proportional to the square of feeding current in the case of regulated current feeding system, the power feeding equipment in the conventional optical communication system is considerably enlarged in scale in order to compensate for power loss in the power transmission path C1 and such trend is obvious in the long range transmission system such as the submarine optical communication system.

Particularly, increase of power loss in the power transmission path C1 is a serious problem from the economical viewpoint.

From this background, the power feeding equipment tends to be the same as that for dealing with a high voltage. For example, in the conventional coaxial cable system, a feeding voltage is about 5 kV, but in the optical communication system, it is expected to be about 15 kV for the power feeding equipment. As the result of employing such high voltage, selection or circuit elements becomes difficult and mounting of such circuit elements also becomes difficult.

JP-A-56-154 839 describes a repeater circuit and DC power supply therefor, in an optical submarine communication system. A Zener diode is used in the power supply conductor to generate a fixed DC voltage when current flows therein. The output of the Zener diode is then converted to an AC voltage which is transformed by an isolating transformer to a lower AC voltage. The lower AC voltage is then rectified to a DC voltage and supplied to the repeater circuit.

### SUMMARY OF THE INVENTION

Therefore, it is an object of the present invention to provide an optical repeater which has reduced a feeding current considering that a greater part of feeding power is lost in the power transmission path and power loss increases in proportion to the square of current.

It is another object of the present invention to provide a regulated current feeding system for optical communication utilizing such an optical repeater.

The object of the present invention is solved by an optical repeater which is coupled between an optical transmission line, composed of optical fibers and a conductor comprising:
an electrical circuit for converting input optical signals received from an input side of said optical fibers to electrical signals, for amplifying said electrical signals, for converting the amplified electrical signals to output optical signals, and for transmitting said output optical signals to an output side of said optical fibers, and
a power supply means connected in series with said conductor for feeding primary regulated DC current from at least one terminal of said optical transmission line, for receiving said primary regulated DC current, for converting said primary regulated DC current into a secondary DC current, higher than said primary DC current and for supplying said secondary DC current to said electrical circuit,
**characterized by**
means for controlling said power supply means to generate a predetermined DC secondary voltage, and
voltage detecting means for detecting the secondary DC voltage and said controlling means controlling said power supply means in accordance with the output of said voltage detecting means.

### BRIEF DESCRIPTION OF THE DRAWINGS

Fig. 1 illustrates a schematic view of an ordinary regulated current feeding system in the wired transmission system;
Fig. 2 is a block diagram illustrating each optical repeater in the existing regulated current feeding system for optical communication;
Fig. 3 is a block diagram illustrating an optical communication system to which the regulated current feeding system for optical communication of the present invention is applied;
Fig. 4 illustrates schematic diagram of an optical repeater of an embodiment of the present invention;
Fig. 5 illustrates schematic diagram of an optical repeater of an another embodiment of the present invention;
Fig. 6 illustrates schematic diagram of an equivalent circuit of Fig. 3;
Fig. 7 illustrates a characteristic curves indicating power consumption of an optical repeater and power transmission path in the regulated current feeding system.

The like parts are given the like numeral references throughout the drawings listed above.

### DETAILED DESCRIPTION OF THE INVENTION

Fig. 3 is a block diagram indicating an example of structure of the optical communication system to which the present invention is applied. In this figure, an optical terminal A and terminal B are connected with optical fiber cables 3, 5, 6 and 8, and a plurality of optical repeaters 4, 7 are provided between such cables. The optical fiber cable is formed by the optical fiber C2 for transmitting optical information and a conductor (power trnsmission path) C1 which is a reinforcing material of the optical fiber and also operates as the power transmission path. In the optical fiber C2, the optical terminal devices 2, 9 are connected respectively at the terminal A and terminal B. Meanwhile, regulated current feeding equipments, regulated current sources 1, 10, are provided at the terminals A, B of the conductor C1.

The signal amplifier circuits 42, 72 and the current-fed switching type power supply circuits 41, 71 are provided at the optical repeaters 4, 7.

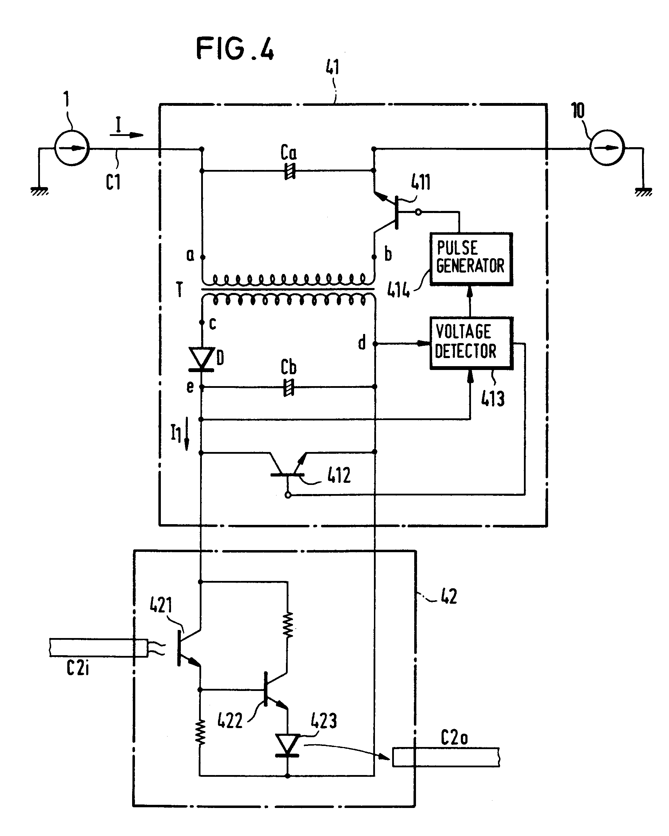

An embodiment of the optical repeater 4 is described with reference to Fig. 4. The signal amplifier circuit 42 is similar to the existing one and comprises a light receiving element 421 which senses the optical signal from the optical fiber C2ᵢ and converts it to an electrical signal, a transistor 422 which amplifies such signal sent from said light receiving element and a light emitting element 423 which receives the amplified signal and emits the light to the next optical fiber C2ₒ. The current-fed switching type voltage drop power supply circuit 41 supplies a necessary power to the signal amplifier circuit 42 and comprises transistors 411, 412, transformer T, rectifying diode D, capacitors Ca, Cb, voltage detection circuit 413 and pulse generating circuit 414. The primary side of transformer T is connected to the conductor C1 while the secondary side is used as the power supply of signal amplifier circuit 42 through the rectifying diode D.

The transistor 411 converts a constant current into an AC voltage through repetition of ON and OFF states in accordance with the pulse frequency and pulse width given from the pulse generating circuit 414 and the transformer T drops the AC voltages obtained at both ends a, b of the primary side thereof. An AC current obtained at both ends c, d in the secondary side of transformer T is rectified by the diode D is regulated to a constant voltage by controlling the pulse width supplied to the transistor 411 and is supplied as the power to the signal amplifier circuit 42. The capacitors Ca and Cb are provided for smoothing. The voltage detection circuit 413 trigers the pulse generating circuit 414 when a DC voltage obtained between e and d is higher than the predetermined value causing it to generate the pulse of the predetermined width within the predetermined period. This pulse is applied to the base of transistor 411. The voltage detection circuit 413 makes constant a voltage between e and d by controlling the base of transistor 412.

Since the voltage between c and d of the secondary side is obtained by dropping a voltage between a and b of the primary side with the transformer T, a current I₁ flowing through the secondary side is higher than the current I supplied to the primary side of transformer T from the regulated current source 1. It is obvious from the fact that the power supplied to the primary side of transformer T is equal to the power obtained at the secondary side when a loss of transformer T can be neglected. Therefore, it is enough that a current lower than the current required for driving the signal amplifier circuit 42 is supplied from the regulated current sources 1, 10.

Since a voltage to be supplied to the signal amplifier circuit 42 is obtained through the current-fed switching type power supply circuit 41 utilizing a supply current I as described above, voltage drop of conductor C1 by a regulated current I can be lowered comparatively. Therefore, the problem of the difficulty of selection and mounting of circuit parts due to a high voltage in the prior art can be solved.

Even in the other repeater 7, the current-fed switching type power supply circuit 71 has the structure similar to that of said current-fed switching type voltage drop power supply circuit 41 and provides the similar operations.

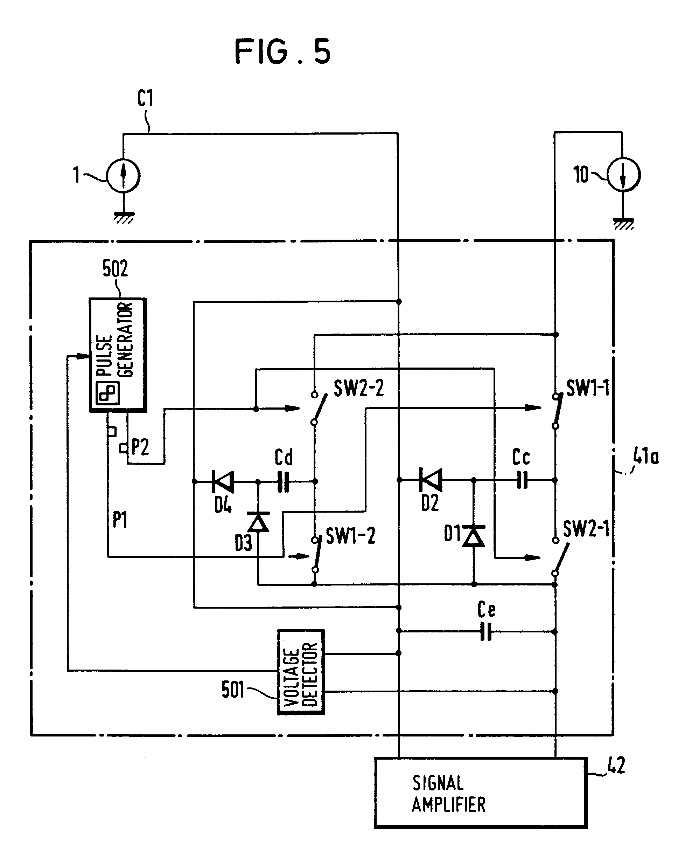

Fig. 5 illustrates the second embodiment of the present invention. In this figure, the current-fed switching type power supply circuit 41a according to the second embodiment of the present invention is formed with a switched capacitor circuit.

Recent advances in ceramic technology has realized a high frequency switching type power supply circuit which does not use electrolytic capacitor and transformer as the switched capacitor circuit, but uses instead a hybrid IC or LSI utilizing a ceramic capacitor and ceramic substrate. In the second embodiment of the present invention, the switched capacitor circuit with hybrid IC or LSI is used as the current-fed switching type power supply circuit.

In Fig. 5, the switched capacitor circuit 41a comprises the switches SW1-1, SW1-2, SW2-1, SW2-2, ceramic capacitors Cc, Cd, Ce, rectifying diodes D1 D2, D3, D4, voltage detection circuit 501 and pulse generating circuit 502.

The voltage detection circuit 501 detects an input voltage or the signal amplifying circuit (same as that illustrated in Fig. 4) and triggers the pulse generating circuit 502 in accordance with its input voltage. The pulse generating circuit 502 outputs the complementary two pulses P1, P2 having the period and pulse width depending on the output signal of voltage detection circuit 501. The pulse P1 controls the switches SW1-1, SW1-2, while the pulse P2 the switches SW2-1, SW2-2. When the switches SW1-1, SW1-2 are ON the switches SW2-1, SW2-2 are OFF. When the switches SW1-1, SW1-2 are OFF, the switches SW2-1, SW2-2 are ON. While the switches SW1-1, SW1-2 are ON, a current flows through the path, capacitor Ce - diode D1 - capacitor Cc, charging the capacitor Cc. But the capacitor Cd is not charged because the switches SW2-1, SW2-2 are OFF. When the switches SW2-1, SW2-2 become ON, a current flows through the path, Ce - D₃ - SW2-2 charging the capacitor Cd. Meanwhile, the capacitor Cc discharges through the path, D₂ - 42 - SW2-1. The capacitors Cd, Ce are connected in parallel for the input of signal amplifier circuit 42. Therefore, when the capacitane of capacity and period and pulse width of two pulses output from the pulse generating circuit 502 are adequately set, a voltage which is lower than the charging voltage across the capacitors Cc and Cd or Cd and Ce can be applied to the signal amplifier circuit 42. As described above, according to the second embodiment of the present invention, it is enough that a current which is lower than that required for driving the signal amplifier circuit 42 is supplied from the regulated current source 1.

This second embodiment provides excellent effect that long operation life can be assured because a ceramic capacitor is used in place of the electrolytic capacitor and easy mounting is also realized because it is formed as the hybrid IC.

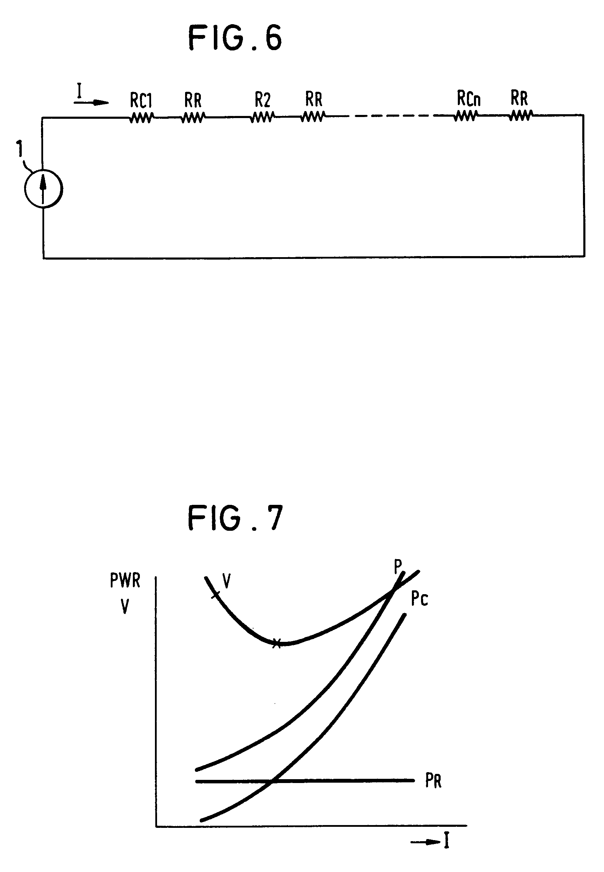

An equivalent of the optical communication system comprising the current-fed switching type power supply circuit 41 or 41a considered from the viewpoint of power consumption is illustrated in Fig. 6. In the same figure, R_{c1}, R_{c2}, ...., R_{cn} are resistances of conductor within the optical fiber cable and R_{R} is equivalent value of power consumption P_{R} within each optical repeater as a resistance. Namely, the power consumption of each optical repeater is equal to sum P_{R} of the power consumption of the current-fed switching type power supply circuit itself and the power consumption of the signal amplifier circuit but it is indicated as ${\text{P}}_{\text{R}} {\text{= I² R}}_{\text{R}}$ for the feeding current I. This power consumption P_{R} is set to constant for all optical repeaters. Therefore, total power consumption P of this system can be expressed as ${\text{P = Pc + P}}_{\text{R}}$ when power loss of conductor is indicated as ${\text{P}}_{\text{c}} {\text{= I² (R}}_{\text{ci}} \text{)}$ 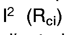 and power loss of optical repeater is indicated as ${\text{P}}_{\text{R}} {\text{= nR}}_{\text{R}} \text{I²}$ . Fig. 7 indicates such relation. The power consumption P_{R} is constant because it does not depend on a feeding current. Power loss Pc of coductor is proportional to the square of feeding current. Meanwhile, a supply voltage V depends on the feeding current and has the property illustrated in Fig. 7.

A feeding voltage V can be minimized when the power consumption of repeater is equal to that of conductor. On the other hand, from the point of view of minimizing total power conmsumption, it is better to reduce a feeding current as much as possible. However, if it is extremely reduced, a problem in operation of the current-fed switching type power supply circuit and a problem in increase of feeding voltage are generated. Therefore, a feeding current is set considering such problem.

Above relation is explained hereunder with a practical example. For example, it is assumed that the power consumption of an optical repeater is 40W, a resistance value of conductor is 1 ohm/km and the transmission path of 1000 km is connected through 25 repeaters. In the existing optical communication system, when a feeding current is set to 2A, total power consumption of all repeaters is 1 kW and power loss of conductor is 4 kW. Therefore, total of 5 kW is required as the supply power. In this case, a feeding voltage is 2.5 kV. Meanwhile, when a feeding current is set to 0.5A based on the present invention, power loss of conductor is lowered to 0.25 kW and power consumption of all repeaters is equal to 1 kW. Therefore, total power is 1.25 kW, which is about 1/3 or less of the existing system. In this case, the feeding voltage is also 2.5 kV which is equal to that of above case. Moreover, when a feeding current is set to 0.2A in the present invention, power loss of conductor becomes 0.04 kW which is about 1/4 of the total power of existing system. In this case, a feeding voltage is 5.2 kV and it does not result in any problem from the viewpoint of high voltage.

Currently, the current-fed switching type power supply circuit being put into practical use assures the conversion efficiency of 80% or more. When the power loss of such power supply circuit is assumed as 20%, power loss of each repeater becomes 48W and total power becomes 1.45 kW. Therefore, even when considering loss of power supply circuit provided to each repeater, the total power consumption can be suppressed sufficiently in comparison with that of the existing system.

As described above, the optimum feeding current can be set considering factors sch as communication distance and power consumption of repeaters, etc. under the condition that power consumption is minimized and increase of feeding voltage is limited to a certain degree.

The present invention can remarkably save power consumption of the optical communication system and reduce the size of power feeding equipment by decreasing a feeding current.

This effect becomes distinctive with increase of communication distance.

## Claims

1. An optical repeater (4, 7) which is coupled between an optical transmission line, composed of optical fibers (C2) and a conductor (C1) comprising:
an electrical circuit (42, 72) for converting input optical signals received from an input side of said optical fibers (C2) to electrical signals, for amplifying said electrical signals, for converting the amplified electrical signals to output optical signals, and for transmitting said output optical signals to an output side of said optical fibers, and
a power supply means (41, 71), connected in series with said conductor (C1) for feeding primary regulated DC current from at least one terminal (A, B) of said optical transmission line, for receiving said primary regulated DC current, for converting said primary regulated DC current into a secondary DC current, higher than said primary DC current and for supplying said secondary DC current to said electrical circuit (42,72),
**characterized by**
means (414,502) for controlling said power supply means (41,71) to generate a predetermined DC secondary voltage, and
voltage detecting means (413,501) for detecting the secondary DC voltage and said controlling means (414,502) controlling said power supply means (41,71) in accordance with the output of said voltage detecting means (413,501).

2. An optical repeater (4, 7) as claimed in claim 1, wherein said power supply means (41, 71) is a switching regulator, said switching regulator including:
a transformer (T) with the primary side (a, b) connected to said conductor and the secondary side (c, d) connected to said electrical circuit (42, 72),
said secondary side of said transformer (T) outputting a lower voltage than the voltage of said primary side.

3. An optical repeater (4, 7) as claimed in claim 1, wherein said power supply means (41, 71) is a switched capacitor circuit (41a), said switched capacitor circuit including:
an input side connected to said conductor (C1), and output side connected to said electrical circuit (42, 72),
said output side outputting a lower voltage than the voltage of said input side.

4. An optical repeater (4, 7) as claimed in claim 3
**characterized in that**
said switched capacitor circuit (41a) includes a pulse generator (502) connected to alternately control the operation of first and second switching means (SW1;SW2); first and second charging capacitors (Cc;Cd) are connected in parallel with said electrical circuit (42, 72) and said first charging capacitor is charged when said first switching means (SW1) is operated and said second charging capacitor is charged when said second switching means (SW2) is operated.

5. An optical repeater (4, 7) as claimed in claim 3 and claim 4, wherein said switched capacitor circuit (41a) is a ceramic hybrid integrated circuit.

6. An optical repeater (4, 7) as claimed in claim 2
**characterized in that**
said switching regulator further includes a transistor means (411) whose current path is connected between one terminal of said transformer (T) and said conductor (C1) and whose gate is connected to a pulse generator (414).

7. An optical repeater (4, 7) in accordance with claim 1
**characterized in that**
the output of said voltage detecting means is connected to the input of said pulse generator (411, 502)

8. A regulated current feeding system including optical repeaters (4, 7) according to any of claims 1 to 7 provided between an optical transmission line composed of optical fibers (C2) and a conductor (C1), comprising:
means (1, 10) provided at a terminal (A, B) of said optical transmission line for feeding regulated DC current to the repeaters (4, 7) via said conductor (C1).

9. A regulated current feeding system as claimed in claim 8, wherein a DC current fed from said means (1, 10) is set to the optimum value in accordance with total power consumption of said conductor (C1) and said optical repeater (4, 7) and a feeding voltage of said means (1, 10) which is determined by said total power consumption and said DC current.

## Patentansprüche

1. Ein optischer Repeater (4, 7), der in eine aus optischen Fasern (C2) und einem Leiter (C1) zusammengesetzte optische Übertragungsleitung gekoppelt ist, umfassend:
eine elektrische Schaltung (42, 72), zur Umwandlung von optischen Eingangssignalen, die von einer Eingangsseite der optischen Fasern (C2) empfangen werden, in elektrische Signale, zur Verstärkung der elektrischen Signale, zur Umwandlung der verstärkten elektrischen Signale in optische Ausgangssignale und zur Übertragung der optischen Ausgangssignale an eine Ausgangsseite der optischen Fasern; und
eine Energieversorgungseinrichtung (41, 71), die mit dem Leiter (C1) in Reihe geschaltet ist, zur Zuführung von primärem geregelten DC-Strom von wenigstens einem Anschluß (A, B) der optischen Übertragungsleitung, zum Empfang des primären geregelten DC-Stroms, zur Umwandlung des primären geregelten DC-Stroms in einen zweiten DC-Strom, der größer ist als der primäre DC-Strom und zur Zuführung des sekundären DC-Stroms an die elektrische Schaltung (42, 72);
**gekennzeichnet durch:**
eine Einrichtung (414, 502) zur Steuerung der Energieversorgungseinrichtung (41, 71) zur Erzeugung einer vorgegebenen sekundären DC-Spannung; und eine Spannungs-Erfassungseinrichtung (413, 504) zur Erfassung der sekundären DC-Spannung und wobei die Steuereinrichtung (414, 502) die Energieversorgungseinrichtung (41, 71) in Abhängigkeit von dem Ausgang der Spannungs-Erfassungseinrichtung (413, 501) steuert.

2. Ein optischer Repeater (4, 7) nach Anspruch 1, **dadurch gekennzeichnet**, daß die Energieversorgungseinrichtung (41, 71) ein Schaltregler ist, wobei der Schaltregler umfaßt:
einen Transformator (T) mit einer Primärseite (a, b), die mit dem Leiter verbunden ist und mit einer Sekundärseite (c, d), die mit der elektrischen Schaltung (42, 72) verbunden ist;
wobei die Sedundärseite des Transformators (T) eine niedrigere Spannung als die Spannung der Primärseite abgibt.

3. Ein optischer Repeater (4, 7) nach Anspruch 1, **dadurch gekennzeichnet**, daß die Energieversorgungseinrichtung (41, 71) eine Schalterkondensator-Schaltung (41a) ist, wobei die Schalterkondensator-Schaltung umfaßt:
eine Eingangsseite, die mit dem Leiter (C1) verbunden ist, und eine Ausgangsseite, die mit der elektrischen Schaltung (42, 72) verbunden ist; und
wobei die Ausgangsseite eine niedrigere Spannung als die Spannung der Eingangsseite abgibt.

4. Ein optischer Repeater (4, 7) nach Anspruch 3, **dadurch gekennzeichnet**, daß
die Schalterkondensator-Schaltung (41a) einen Impulsgenerator (502) umfaßt, der angeschlossen ist, um den Betrieb von ersten und zweiten Schalteinrichtungen (SW1; SW2) alternierend zu steuern; erste und zweite Ladekondensatoren (Cc; Cd) parallel zur elektrischen Schaltung (42, 72) angeschlossen sind und der erste Ladekondensator geladen wird, wenn die erste Schalteinrichtung (SW1) betrieben wird, und der zweite Ladekondensator geladen wird, wenn die zweite Schalteinrichtung (SW2) betrieben wird.

5. Ein optischer Repeater (4, 7) nach Anspruch 3 und Anspruch 4, **dadurch gekennzeichnet**, daß die Schalterkondensator-Schaltung (41a) eine keramische hybride integrierte Schaltung ist.

6. Ein optischer Repeater (4, 7) nach Anspruch 2, **dadurch gekennzeichnet**, daß
der Schaltregler ferner eine Transistoreinrichtung (411) umfaßt, deren Strompfad zwischen einem Anschluß des Transformators (T) und dem Leiter (C1) angeschlossen ist und deren Gate mit einem Impulsgenerator (414) verbunden ist.

7. Ein optischer Repeater (4, 7) nach Anspruch 1, **dadurch gekennzeichnet**, daß
der Ausgang der Spannungs-Erfassungseinrichtung mit dem Eingang des Impuls-Generators (411, 502) verbunden ist.

8. Ein geregeltes Stromzuführungssystem mit optischen Repeatern (4, 7) nach einem der Ansprüche 1 bis 7, die in eine aus optischen Fasern (C2) und einem Leiter (C1) zusammengesetzte optische Übertragungsleitung vorgesehen sind, umfassend:
eine Einrichtung (1, 10), die an einem Anschluß (A, B) der optischen Übertragungsleitung vorgesehen ist, um geregelten DC-Strom über die den Leiter (C1) den Repeatern (4, 7) zuzuführen.

9. Ein regeltes Strom-Zuführungssystem nach Anspruch 8, **dadurch gekennzeichnet**, daß ein von der Einrichtung (1, 10) zugeführter DC-Strom auf den optimalen Wert gemäß einem Gesamtenergieverbrauch des Leiters (C1) und des optischen Repeaters (4, 7) und einer Zuführungsspannung der Einrichtung (1, 10), die durch den Gesamtenergieverbrauch und den DC-Strom bestimmt ist, eingestellt ist.

## Revendications

1. Répéteur optique (4, 7) qui est couplé entre une ligne de transmission optique, composé de fibres optiques (C2) et un conducteur (C1) comprenant :
un circuit électrique (42, 72) pour convertir des signaux optiques d'entrée reçus par un côté d'entrée desdites fibres optiques (C2) en signaux électriques, pour amplifier lesdits signaux électriques, pour convertir les signaux électriques amplifiés en signaux optiques de sortie, et pour transmettre lesdits signaux optiques de sortie à un côté de sortie desdites fibres optiques, et
un dispositif d'alimentation de puissance (41, 71), raccordé en série avec ledit conducteur (C1) pour fournir un courant continu régulé primaire par au moins une borne (A, B) de ladite ligne de transmission optique, pour recevoir ledit courant continu régulé primaire, pour convertir ledit courant continu régulé primaire en un courant continu secondaire, supérieur audit courant continu primaire et pour fournir ledit courant continu secondaire audit circuit électrique (42, 72),
caractérisé par
un dispositif (414, 502) pour commander ledit dispositif d'alimentation de puissance (41, 71) pour générer une tension secondaire continue prédéterminée, et
un dispositif de détection de tension (413, 501) pour détecter la tension continue secondaire et ledit dispositif de commande (414, 502) commandant ledit dispositif d'alimentation de puissance (41, 71) en fonction de la sortie dudit dispositif de détection de tension (413, 501).

2. Répéteur optique (4, 7) selon la revendication 1, dans lequel ledit dispositif d'alimentation de puissance (41, 71) est un régulateur de commutation, ledit régulateur de commutation comprenant :
un transformateur (T) avec le primaire (a, b) raccordé audit conducteur et le secondaire (c, d) raccordé audit circuit électrique (42, 72),
ledit secondaire dudit transformateur (T) délivrant une tension inférieure à la tension dudit primaire.

3. Répéteur optique (4, 7) selon la revendication 1, dans lequel ledit dispositif d'alimentation de puissance (41, 71) est un circuit à capacité commutée (41a), ledit circuit à capacité commutée comprenant :
un côté d'entrée raccordé audit conducteur (C1), et un côté de sortie raccordé audit circuit électrique (42, 72),
ledit côté de sortie fournissant une tension inférieure à la tension dudit côté d'entrée.

4. Répéteur optique (4, 7) selon la revendication 3,
caractérisé en ce que
ledit circuit à capacité commutée (41a) comprend un générateur d'impulsions (502) raccordé pour commander alternativement le fonctionnement des premier et second dispositifs de commutation (SW1 ; SW2) ; des premier et second condensateurs de charge (Cc ; Cd) sont reliés en parallèle audit circuit électrique (42, 72) et ledit premier condensateur de charge est chargé lorsque ledit premier dispositif de commutation (SW1) est mis en fonctionnement et ledit second condensateur de charge est chargé lorsque ledit second dispositif de commutation (SW2) est mis en fonctionnement.

5. Répéteur optique (4, 7) selon la revendication 3 et la revendication 4, dans lequel ledit circuit à capacité commutée (41a) est un circuit intégré hybride céramique.

6. Répéteur optique (4, 7) selon la revendication 2, caractérisé en ce que
ledit régulateur de commutation comprend en outre un dispositif à transistor (411) auquel un chemin de courant est relié entre une borne dudit transformateur (T) et ledit conducteur (C1) et dont la grille est reliée à un générateur d'impulsions (414).

7. Répéteur optique (4, 7) selon la revendication 1, caractérisé en ce que
la sortie dudit dispositif de détection de tension est reliée à l'entrée dudit générateur d'impulsions (411, 502).

8. Système d'alimentation de courant régulé comprenant des répéteurs optiques (4, 7) selon l'une quelconque des revendications 1 à 7 placés entre une ligne de transmission optique composée de fibres optiques (C2) et un conducteur (C1), comprenant :
un dispositif (1, 10) placé sur une borne (A, B) de ladite ligne de transmission optique pour fournir un courant continu régulé aux répéteurs (4, 7) via ledit conducteur (C1).

9. Système d'alimentation de courant régulé selon la revendication 8, dans lequel un courant continu fourni par ledit dispositif (1, 10) est réglé sur une valeur optimale en fonction de la puissance consommée totale par ledit conducteur (C1) et par ledit répéteur optique (4, 7) et une tension d'alimentation dudit dispositif (1, 10) qui est déterminée par ladite puissance consommée totale et par ledit courant continu.
